# EUROPÄISCHE PATENTSCHRIFT

(11) **EP 0 713 018 B1**
(45) Veröffentlichungstag und Bekanntmachung des Hinweises auf die Patenterteilung: **29.07.1998**
(21) Anmeldenummer: 95810666.8
(22) Anmeldetag: 27.10.1995
(51) Int. Cl.: F16B 37/04, F16B 7/04, E03C 1/10, E03C 1/322

(54) **Verbindungsanordnung**
Fastening device
Dispositif de fixation

(30) Priorität: 18.11.1994 CH 3482/94
(43) Veröffentlichungstag der Anmeldung: 22.05.1996
(73) Patentinhaber: GEBERIT TECHNIK AG, CH-8645 Jona (CH)
(72) Erfinder: Gartmann, Mario, CH-8716 Schmerikon (CH)
(74) Vertreter: Groner, Manfred

(56) Entgegenhaltungen:
- EP-A- 0 329 137
- DE-A- 3 537 135
- FR-A- 2 062 421
- GB-A- 1 579 941
- US-A- 4 164 971

## Beschreibung

Die Erfindung betrifft eine Verbindungsanordnung nach dem Oberbegriff des Patentanspruchs 1.

Eine Anordnung dieser Art ist in Figur 14 der EP-A-0 493 319 des Anmelders offenbart. Um bei dieser bekannten Anordnung eine Profilstange mit einem Winkelstück zu verbinden, wird der Klemmteil in eine Nut der Profilstange und der Gewindebolzen in eine Oeffnung des Winkelstücks eingesetzt. Zum Festklemmen des Klemmteils in der Nut, wird dieser an einem Innensechskant weniger als 90° gedreht, wobei ein Drehmoment von etwa 6 bis 8 N/m zur Ueberwindung eines Widerstandes ausgeübt werden muss. Anschliessend wird auf den Gewindebolzen eine Mutter aufgeschraubt und diese unter Anlage am Winkelstück festgedreht, wobei die Profilstange an das Winkelstück angelegt wird. Die Profilstange ist damit fest und gleichzeitig lösbar mit dem Winkelstück verbunden.

Die EP-A-0 579 578 zeigt ebenfalls eine Verbindungsanordnung, bei der ein Klemmteil in eine Nut einer Profilstange eingesetzt und um etwa 90° gedreht und festgeklemmt wird. Der Klemmteil ist hier an einem Hebel angeformt, der zum Verdrehen des Klemmteils umgelegt wird. Diese Anordnung ermöglicht eine wesentlich einfachere und schnellere Montage als die oben genannte Anordnung, da ohne Werkzeug montiert werden kann und lediglich eine einfache Bewegung auszuführen ist. Mit dieser Verbindungsanordnung kann jedoch nicht die Festigkeit der oben genannten Anordnung erreicht werden.

Schliesslich zeigt die EP-A-0 598 281 eine Verbindungsanordnung, bei der ein Klemmteil gedreht und gleichzeitig Tellerfedern gespannt werden. Auch bei dieser Anordnung ist die Montage vergleichsweise einfach. Die Anwendung ist jedoch sehr speziell und die Verbindungsmittel in der Herstellung vergleichsweise aufwendig.

Der Erfindung liegt die Aufgabe zugrunde, eine Verbindungsanordnung der genannten Art zu schaffen, die sich durch eine einfachere und schnellere Montage auszeichnet, die aber dennoch eine sehr feste und zuverlässige Verbindung ergibt. Die Aufgabe ist bei einer gattungsgemässen Verbindungsanordnung gemäss Anspruch 1 gelöst.

Bei der erfindungsgemässen Verbindungsanordnung wird weiterhin eine Gewindemutter mit all ihren bekannten Vorteilen verwendet. Beim Montieren ist lediglich noch ein Werkzeug zum Drehen der Gewindemutter erforderlich. Das bisher erforderliche zweite Werkzeug zum Drehen des Klemmteils am Gewindebolzen kann entfallen. Da lediglich noch eine Drehbewegung erforderlich ist, kann die Montage wesentlich einfacher und schneller als bisher durchgeführt werden. Bei Sanitärinstallationen, die vielfach sehr komplex sind und viele Einzelteile umfassen, sind solche Montagevereinfachungen sehr wesentlich und werden seit langem angestrebt. Mit der erfindungsgemässen Anordnung kann die Montagedauer ohne Minderung der Festigkeit wesentlich verkürzt werden.

Die Gewindemutter kann gemäss Weiterbildungen der Erfindung besonders kostengünstig durch Klebemittel oder durch Deformation des Bolzengewindes auf diesem festgelegt werden.

Die Mutter ist vorzugsweise in beiden Drehrichtungen auf dem Gewindebolzen festgelegt. Eine vormontierte Gewindemutter ist dann in einer vorbestimmten und für die Montage besonders geeigneten Position auf dem Gewindebolzen festgelegt und kann nicht verlorengehen. Der Gewindebolzen mit dem Klemmteil und die Mutter bilden dann eine Einheit, was für die Lagerhaltung und die Arbeit am Montageort eine Vereinfachung bedeutet.

Weitere Vorteile ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: ein Schnitt durch eine erfindungsgemässe Verbindungsanordnung,
- Fig. 2 und 3: Ansichten der Verbindungsanordnung, und
- Fig. 4: eine weitere Ansicht der erfindungsgemässen Verbindungsanordnung.

Der erste Teil 1 ist vorzugsweise ein hohles, aus Blech hergestelltes Vierkantrohr mit vier Schwalbenschwanznuten 15, die sich über die ganze Länge des Teils 1 erstrecken. Im Nutengrund sind quer verlaufende Rillen 16 eingearbeitet, deren Zweck weiter unten erläutert wird.

Der zweite Teil 2 ist beispielsweise eine Anschlussplatte, die zur Befestigung von sanitären Anschlussteilen dient. Eine solche Platte ist in der EP-A-0 579 578 offenbart. Es sind jedoch auch andere Ausführungen des Teils 2 denkbar.

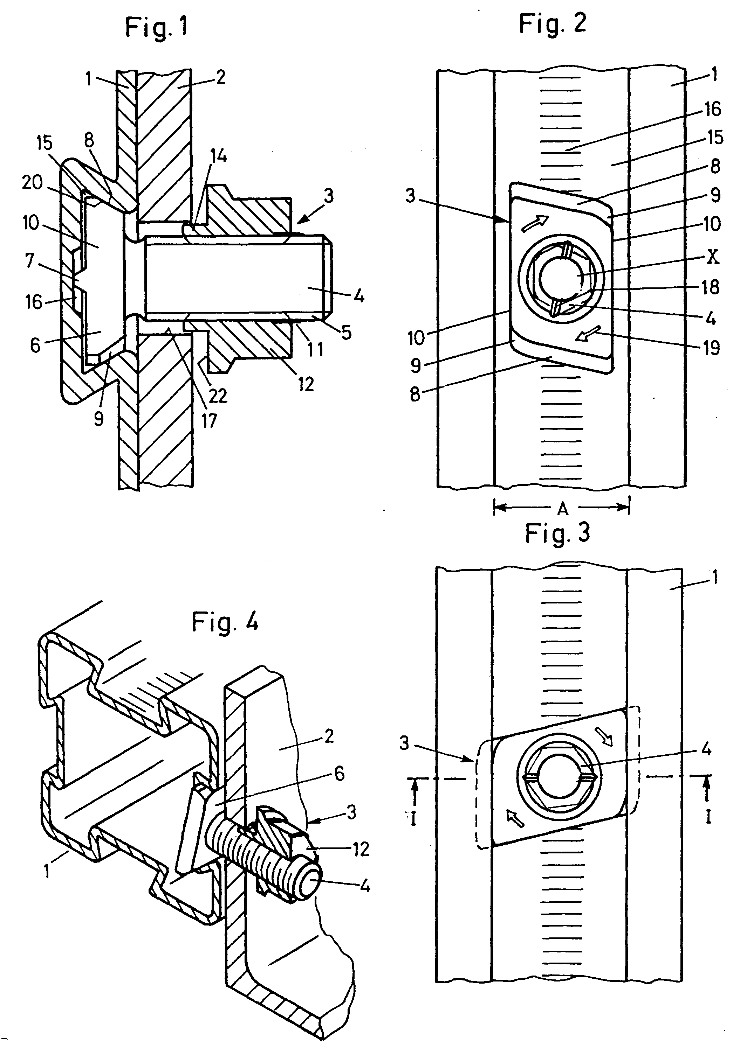

Um die beiden Teile 1 und 2 lösbar miteinander zu verbinden, ist ein Befestigungsmittel 3 mit einem an einem Gewindebolzen 4 angebrachten Klemmteil 6 und einer Gewindemutter 12 vorgesehen. Der Klemmteil 6 weist zwei parallele Führungsflächen 10 auf, deren Abstand zueinander etwas kleiner ist als die in Figur 2 gezeigte engste Weite A einer Nut 15. Quer zu den Führungsflächen 10 verlaufen zwei im Abstand zueinander anordnete Keilflächen 8, die an Rundungen 9 jeweils in eine Führungsfläche 10 übergehen. Der Abstand der beiden Keilflächen 8 zueinander ist grösser als der Abstand A. In der Drehstellung gemäss Figur 2 ist der Klemmteil 6 lose in die Nut 15 eingesetzt und kann in dieser in beiden Richtungen verschoben werden. Um den Klemmteil 6 in der Nut 15 festzuklemmen, muss dieser in Richtung der Pfeile 19 um die Achse X des Gewindebolzens 4 gedreht werden, bis die Keilflächen 8 an den Flanken 20 (Figur 1) der Nut 15 anliegen und der Klemmteil 6 nicht weitergedreht werden kann. Bei Ausführung dieser Drehbewegung wird ein Rastnokken 7 in eine Rillen 6 eingetrieben. Die Figur 3 zeigt die Position des Klemmteils 6 in der festgeklemmten Lage. Um den Klemmteil 6 in die in Figur 3 gezeigte Lage zu verdrehen, muss ein erhebliches Drehmoment von beispielsweise 6 bis 8 N/m ausgeübt werden. In der festgeklemmten Lage kann sich dann der Klemmteil 6 von selbst nicht lösen.

Auf dem Gewindebolzen 4, der durch eine Oeffnung 17 des zweiten Teils 2 hindurchgesteckt ist, ist eine Gewindemutter 12 angeordnet, die dazu dient, den Klemmteil 6 zu drehen und anschliessend im festgezogenen Zustand als an sich übliche Schraubenmutter den Teil 2 am Teil 1 zu sichern. Damit der Klemmteil 6 an der Mutter 12 gedreht werden kann, ist diese auf dem Gewindebolzen 4 soweit festgelegt, dass beim Drehen der Gewindemutter 12 der gemäss Figur 2 in die Nut 15 eingesetzte Klemmteil 6 mitgedreht und in die in Figur 3 gezeigte festgeklemmte Lage gebracht wird. Während dieser Drehbewegung dreht sich somit der Gewindebolzen 4 und der fest an diesem angebrachte Klemmteil 6 ohne relative Bewegung mit.

Damit die Mutter 12 auf den Klemmteil 6 das vergleichsweise hohe Drehmoment ausüben kann, ist beispielsweise ein Klebstoff 11 zwischen einen Bereich des Aussengewindes 5 und des Innengewindes 21 der Schraubenmutter 12 eingebracht. Als alternative Ausführung ist eine Deformation des Aussengewindes 5 im Bereich der in Figur 1 gezeigten Position der Gewindemutter 12 vorgesehen. Das Aussengewinde 5 wird vorzugsweise bei ganz eingedrehter Gewindemutter 12 im genannten Bereich deformiert und anschliessend die Gewindemutter 12 zurückgedreht, bis ihr Innengewinde 21 sich im deformierten Bereich befindet und somit die Gewindemutter 12 auf dem Gewindebolzen 4 festgelegt ist.

Die Gewindemutter 12 ist lediglich soweit auf dem Gewindebolzen 4 festgelegt, dass das genannte Drehmoment ausgeübt werden kann. Ist der Klemmteil 6 gemäss Figur 3 festgeklemmt, so kann durch eine Erhöhung des Drehmomentes an der Gewindemutter 12 die Drehhemmung bezüglich des Gewindebolzens 4, also beispielsweise die Hemmung durch die Deformation des Aussengewindes 5 oder die Haftfähigkeit des Klebstoffes 11 überwunden werden. Die Gewindemutter 12 kann dann auf dem Gewindebolzen 4 weiter eingedreht und an dem Teil 2 angelegt und festgezogen werden. Zur Zentrierung des Teils 2 ist an der Innenseite 22 der Gewindemutter 12 ein ringförmiger Ansatz 14 angebracht, der beim Eindrehen der Gewindemutter 12 in die Oeffnung 17 eingreift und den Teil 2 bezüglich des Gewindebolzens 4 positioniert.

Um das Einsetzen des Klemmteils 6 in die Nut 15 zu erleichtern, ist an der Mutter 12 eine Markierung 18, beispielsweise ein Kerbe vorgesehen. Ist der Klemmteil 6 gemäss Figur 3 in der Nut verankert, so erstreckt sich die Markierung 18 quer zur Längsrichtung der Nut 15 und ermöglicht damit eine Kontrolle der Endposition des Klemmteils 6, auch wenn dieser durch den Teil 2 abgedeckt und damit nicht sichtbar ist.

## Patentansprüche

1. Verbindungsanordnung, mit
a) einem ersten Teil (1), der eine Profilstange eines Montagegestells für die Vorwandmontage von Sanitärbauteilen ist und wenigstens eine Nut (15) aufweist,
b) einem zweiten Teil (2), und
c) Befestigungsmittel (3) zum Verbinden der genannten beiden Teile (1,2), wobei ein Gewindebolzen (4) am einen Ende einen Klemmteil (6) aufweist, der zwei gegenüberliegende und an die Nutenwandung anzulegende Flächen (8) aufweist und der in die Nut (15) einzusetzen und darin durch eine Drehbewegung in der Nut (15) festzuklemmen ist und auf dessen anderes, in den zweiten Teil (2) einzusetzendes Ende eine festzuziehende Gewindemutter (12) aufgesetzt ist, dadurch gekennzeichnet, dass die Gewindemutter (12) mit dem Gewindebolzen (4) eine Einheit bildet und auf wenigstens einem Abschnitt des Bolzengewindes (5) soweit drehhemmend festgelegt ist, dass beim Drehen der Gewindemutter (12) der in die Nut (15) eingesetzte Klemmteil (6) mitdreht und gegen die genannte Widerstandskraft in eine Lage gedreht wird, in welcher er in der Nut (15) festgeklemmt ist und sich von selbst nicht löst und dass nach einer weiteren Erhöhung des Drehmoments an der Gewindemutter (12) die Drehhemmung aufgehoben wird und die Gewindemutter (12) zum Weiterdrehen löst.

2. Anordnung nach Anspruch 1, dadurch gekennzeichnet, dass die Gewindemutter (12) derart auf dem Gewindebolzen (4) festgelegt ist, dass der Klemmteil (6) ohne relative Bewegung zwischen dem Gewindebolzen (4) und der Gewindemutter (12) in die festgeklemmte Lage drehbar ist.

3. Anordnung nach Anspruch 1 oder 2, dadurch gekennzeichnet, dass die Gewindemutter (12) nach dem Festklemmen des Klemmteils (6) weiter auf dem Bolzen (4) eingedreht werden kann.

4. Anordnung nach einem der Ansprüche 1 bis 3, dadurch gekennzeichnet, dass lediglich ein Teilabschnitt des Gewindebolzens (4) drehhemmend ausgebildet ist.

5. Anordnung nach Anspruch 4, dadurch gekennzeichnet, dass der drehhemmend ausgebildete Teilabschnitt im Abstand zum Klemmteil (6) auf dem Gewindebolzen (4) angeordnet ist.

6. Anordnung nach einem der Ansprüche 1 bis 5, dadurch gekennzeichnet, dass das Aussengewinde (5) des Gewindebolzens (4) in wenigstens einem Teilbereich deformiert ist.

7. Anordnung nach einem der Ansprüche 1 bis 5, dadurch gekennzeichnet, dass die Gewindemutter (12) mit einem Klebstoff (11) auf dem Gewindebolzen (4) festgelegt ist.

8. Anordnung nach einem der Ansprüche 1 bis 7, dadurch gekennzeichnet, dass die Gewindemutter (12) auf dem Gewindebolzen (4) vormontiert und auf diesem festgelegt ist.

9. Anordnung nach einem der Ansprüche 1 bis 8, dadurch gekennzeichnet, dass die Gewindemutter (12) in ihren beiden Drehrichtungen auf dem Gewindebolzen festgelegt ist.

10. Anordnung nach einem der Ansprüche 1 bis 9, dadurch gekennzeichnet, dass die Gewindemutter (12) eine Markierung (18) aufweist, an welcher die Drehposition des Klemmteils (6) erkennbar ist.

## Claims

1. Connection arrangement comprising
a) a first part (1) being a profile bar of a mounting stand for the pre-wall mounting of sanitary parts and having at least one groove (15),
b) a second part (2), and
c) fastening means (3) for connecting said first and second parts (1, 2), whereby a bolt (4) has a clamping means (6) at one end which bolt disposes of two opposite surfaces (8) to be fixed to the side of the groove and which is to be put into the groove (15) and attached therein by a rotational movement within the groove (15) and on whose other end, which is to be put into the second part (2), a nut (12) to be tightened is placed, characterized in that the nut (12) forms a unit with the bolt (4) and is attached rotation impedingly on at least one section of the exterior thread (5) in such a way that upon rotation of the nut (12) the clamping means (6) put into the groove (15) is rotated as well and rotated against a resistance into a position in which the clamping means is wedged in the groove (15) and cannot detach itself, and that upon further increase of the turning moment at the nut (12) the rotation impeding action is neutralized and the nut (12) ist detached for further rotation.

2. Arrangement according to claim 1 characterized in that the nut (12) is attached on the bolt (4) in such a way that the clamping means (6) can be rotated into the wedged position without relative movement between the bolt (4) and the nut (12).

3. Arrangement according to claim 1 or 2 characterized in that after wedging of the clamping means the nut (12) can be further screwed-in on the bolt (4).

4. Arrangement according to one of claims 1 to 3 characterized in that only a partial section of the bolt (4) is built so as to impede rotation.

5. Arrangement according to claim 4 characterized in that the rotation impedingly built partial section is arranged on the bolt (4) in a distance from the clamping means (6).

6. Arrangement according to one of claims 1 to 5 characterized in that the exterior thread (5) of the bolt (4) is deformed in at least one partial section.

7. Arrangement according to one of claims 1 to 5 characterized in that the nut (12) is fixed on the bolt (4) by an adhesive (11).

8. Arrangement according to one of claims 1 to 7 characterized in that the nut (12) is pre-assembled on the bolt (4) and is attached theron.

9. Arrangement according to one of claims 1 to 8 characterized in that the nut (12) is fixed on the bolt (4) in both directions of rotation.

10. Arrangement according to one of claims 1 to 9 characterized in that the nut (12) includes a mark indicating the rotational position of said clamping means (6).

## Revendications

1. Dispositif de liaison comportant
a) une première partie (1) qui possède une tige profilée d'un châssis de montage pour le montage, dans un mur de parement, de composants sanitaires, et au moins une rainure (15),
b) une deuxième partie (2),
c) des moyens de fixation (3) pour raccorder lesdites deux parties (1, 2), un boulon fileté (4) possédant sur une extrémité une partie de blocage (6), qui possède deux surfaces opposées (8), qui doivent s'appliquer contre la paroi de la rainure, et qui doit être insérée dans la rainure (15) et doit y être bloquée moyennant un mouvement de rotation dans cette rainure (15), tandis que sur l'autre extrémité de cette partie de blocage, qui doit être insérée dans la seconde partie (2), est emmanché un écrou (12) devant être serré fermement,
caractérisé en ce que l'écrou (12) forme une unité avec le boulon fileté (4) et est fixé de manière à empêcher toute rotation, sur au moins une partie du filetage (5) du boulon de telle sorte que lors de la rotation de l'écrou (12), la partie de blocage (16) insérée dans la rainure (15) tourne conjointement et est amenée par rotation, à l'encontre de la force résistive indiquée, dans une position, dans laquelle elle est bloquée fermement dans la rainure (15) et ne se desserre pas d'elle-même et qu'après un accroissement supplémentaire du couple appliqué à l'écrou (12), le blocage en rotation est supprimé et l'écrou (12) est desserré de manière à pouvoir continuer à tourner.

2. Dispositif selon la revendication 1, caractérisé en ce que l'écrou (12) est fixé sur le boulon fileté (4) de telle sorte que la partie de blocage (6) peut être amenée en tournant dans la position bloquée fermement, sans déplacement relatif entre le boulon fileté (4) et l'écrou (12).

3. Dispositif selon la revendication 1 ou 2, caractérisé en ce qu'après le blocage ferme de la partie de blocage (6), on peut continuer à serrer l'écrou (12) sur le boulon (4).

4. Dispositif selon l'une des revendications 1 à 3, caractérisé en ce que seule une partie du boulon fileté (4) est agencée de manière à réaliser un blocage en rotation.

5. Dispositif selon la revendication 4, caractérisé en ce que la partie agencée de manière à réaliser un blocage en rotation est disposée à distance de la partie de blocage (6), sur le boulon fileté (4).

6. Dispositif selon l'une des revendications 1 à 5, caractérisé en ce que le filetage extérieur (5) du boulon fileté (5) est déformé au moins sur une partie.

7. Dispositif selon l'une des revendications 1 à 5, caractérisé en ce que l'écrou (12) est fixé avec une colle (11) sur le boulon fileté (4).

8. Dispositif selon l'une des revendications 1 à 7, caractérisé en ce que l'écrou (12) est préalablement monté sur le boulon fileté (4) et est fixé sur ce dernier.

9. Dispositif selon l'une des revendications 1 à 8, caractérisé en ce que l'écrou (12) est bloqué dans ses deux sens de rotation sur le boulon fileté.

10. Dispositif selon l'une des revendications 1 à 9, caractérisé en ce que l'écrou (12) possède une marque (18), sur la base de laquelle on peut identifier la position en rotation de la partie de blocage (6).
